(19) Europäisches Patentamt
European Patent Office
Office européen des brevets

(11) **EP 4 737 846 A1**

(12) **EUROPEAN PATENT APPLICATION**
published in accordance with Art. 153(4) EPC

(43) Date of publication:
06.05.2026 Bulletin 2026/19

(51) International Patent Classification (IPC):
$G01B\ 11/00$ (2006.01)     $G01B\ 11/08$ (2006.01)
$G01B\ 11/14$ (2006.01)     $G01B\ 11/24$ (2006.01)
$G01B\ 11/30$ (2006.01)

(21) Application number: 23947237.6

(22) Date of filing: 04.09.2023

(86) International application number:
PCT/CN2023/116674

(87) International publication number:
WO 2025/025295 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.08.2023 CN 202310958248

(71) Applicant: SpeedBot Robotics Co., Ltd
Changsha, Hunan 410100 (CN)

(72) Inventors:
• LI, Ji
  Changsha, Hunan 410100 (CN)
• CHEN, Jie
  Changsha, Hunan 410100 (CN)
• DENG, Junjie
  Changsha, Hunan 410100 (CN)

(74) Representative: Murgitroyd & Company
165-169 Scotland Street
Glasgow G5 8PL (GB)

(54) **ONLINE FULL DIMENSIONAL INSPECTION METHOD AND SYSTEM BASED ON MULTI-VIEW VISION**

(57) An online full-dimension inspection method and system based on multi-view vision are provided. The method first determines correspondences between cameras in the camera array and the holes to be measured, performs three-dimensional reconstruction on all holes to be measured using a triangulation method based on the hole center coordinates and the correspondence to obtain three-dimensional coordinates of the holes to be measured in a workpiece coordinate system, and then transforms the three-dimensional coordinates of each hole to be measured from the workpiece coordinate system to a reconstructed measurement coordinate system and determines dimensional information of each hole to be measured in the measurement coordinate system. In this way, the three-dimensional coordinates of the holes to be measured are determined through joint calibration using the camera array, and the dimensional information of the holes to be measured is determined based on the measurement coordinate system and the three-dimensional coordinates of the holes to be measured, which achieves non-contact inspection, and is suitable for high-precision dimensional inspection of online inspection requirements on an assembly line, and the method has the characteristics of high efficiency, high precision, and high stability.

FIG. 1

## Description

The present application claims priority to Chinese patent application No. 202310958248.8, titled "ONLINE FULL DIMENSIONAL INSPECTION METHOD AND SYSTEM BASED ON MULTI-VIEW VISION", filed on August 1, 2023, the entire content of which is incorporated herein by reference.

## TECHNICAL FIELD

The present application relates to the field of multi-view vision dimensional measurement technologies, and in particular, to an online full-dimension inspection method and system based on multi-view vision.

## BACKGROUND

As an indispensable part of industrial manufacturing, dimensional inspection can accomplish a wide range of measurement items, such as position tolerance, flatness, profile tolerance, linear distance, aperture, or the like, depending on specific inspection requirements. Currently, companies often rely on conventional measuring tools such as micrometers, vernier calipers, mating parts, gauge blocks, etc., for dimensional inspection. Alternatively, for some large and precision parts, inspection equipment like coordinate measuring machines or flexible arms are used for measurement. During the measurement, the structural information of holes is obtained to determine whether the measured parts meet specifications. The former mostly involves manual operation, requiring substantial manpower and resources to detect while offering relatively low inspection accuracy, making it unsuitable for high-precision measurement. The latter, although providing good inspection accuracy and repeatability, typically requires contact-based measurement at each measuring point, with inspection times generally calculated in hours, which is difficult to meet the production cycle of assembly lines and unsuitable for online measurement.

Thus, the related art struggles to balance high-precision measurement with efficient inspection.

## SUMMARY

The present application provides an online full-dimension inspection method and system based on multi-view vision.

To achieve the above objectives, the present application is realized by the following technical solutions.

In a first aspect, the present application provides an online full-dimension inspection method based on multi-view vision, including:

S1: acquiring images of holes to be measured on a workpiece to be inspected through a camera array;

S2: detecting hole center coordinates of the holes to be measured, wherein the hole center coordinates are two-dimensional coordinates of each hole to be measured in each image;

S3: saving the hole center coordinates in groups, and determining a correspondence between each camera in the camera array and the holes to be measured based on the hole center coordinates;

S4: performing three-dimensional reconstruction on all of the holes to be measured using a triangulation method based on the hole center coordinates and the correspondence to obtain three-dimensional coordinates of the holes to be measured in a workpiece coordinate system; and

S5: transforming the three-dimensional coordinates of each hole to be measured from the workpiece coordinate system to a reconstructed measurement coordinate system, and determining dimensional information of each hole to be measured in the measurement coordinate system.

Optionally, the S1 includes:
controlling the camera array to acquire an image of the workpiece to be inspected in a time-division manner under set general lighting and local lighting.

Optionally, the S2 includes:

generating, through projection, 2D template images of the holes to be measured under the camera array and template hole center coordinates corresponding to the holes to be measured based on intrinsic and extrinsic parameters of cameras in the camera array and CAD three-dimensional coordinates of the holes;

obtaining edge feature point information from the template images; and

cropping a region of interest, ROI image of each hole to be measured from the image of the workpiece to be inspected, performing edge extraction on the ROI image to obtain an edge image, extracting gradient information of each pixel from the edge image, and performing sliding window search and matching between the gradient information and the edge feature point information in the template images to obtain the hole center coordinates in the ROI image.

Optionally, the correspondence between each camera and the holes to be measured in the S3 refers to which holes can be captured by each camera and which cameras can capture each hole.

Optionally, the S4 includes:

determining optimized camera intrinsic parameters and optimized camera extrinsic parameters; and
calculating the three-dimensional coordinates of the holes to be measured using the triangulation method based on the camera intrinsic parameters, the camera extrinsic parameters, and the correspondence, wherein the calculation formula satisfies the following relation:

$$X = K[R|T]x,$$

where $X$ represents reconstructed hole center coordinates after triangulation, $K$ represents the camera intrinsic parameters, $[R|T]$ represents the camera extrinsic parameters, and $x$ represents the hole center coordinates.

Optionally, before the S5, the method further includes:
determining one datum plane and two datum holes of the workpiece to be inspected, and aligning the one datum plane and the two datum holes with theoretical coordinates according to a drawing requirement of an actual workpiece to be inspected to perform coordinate system establishment and obtain the measurement coordinate system.
Optionally, the S5 includes:

determining a position tolerance of each hole to be measured, wherein the position tolerance satisfies the following relation:

$$position = 2 * sqrt((x1 - x0)^2 + (y1 - y0)^2 + (z1 - z0)^2),$$

where *position* represents the position tolerance, reconstructed measurement coordinates are (x1, y1, z1), the theoretical coordinates are (x0, y0, z0), and *sqrt* represents the square root expression; and
determining the dimensional information of each hole to be measured based on the three-dimensional coordinates of each hole to be measured in the workpiece coordinate system and the position tolerance.

In a second aspect, the present application further provides an online full-dimension inspection system based on multi-view vision, including: a darkroom, a camera array, and a master control unit. The camera array is communicatively connected to the master control unit. The camera array includes a plurality of first cameras, a plurality of second cameras, and a plurality of third cameras. The plurality of first cameras are spaced apart from each other and arranged at top of the darkroom, the plurality of second cameras are spaced apart from each other and arranged at bottom of the darkroom, and the plurality of third cameras are spaced apart from each other on side walls of the darkroom in a circumferential direction of the darkroom.
The camera array is configured to acquire images of holes to be measured on a workpiece to be inspected.
The master control unit is configured to:

detect hole center coordinates of the holes to be measured, wherein the hole center coordinates are hole center coordinates of the holes to be measured under the cameras;
save the hole center coordinates in groups, and determine a correspondence between each camera in the camera array and the holes to be measured based on the hole center coordinates;
perform three-dimensional reconstruction on all of the holes to be measured based on the correspondence and a triangulation method, and determine three-dimensional coordinates of all holes to be measured in a workpiece coordinate system based on a three-dimensional reconstruction result and the hole center coordinates; and
transform the three-dimensional coordinates of the holes to be measured in the workpiece coordinate system into dimensional information in a reconstructed measurement coordinate system.

Optionally, the system further includes a plurality of light sources arranged on inner walls of the darkroom at intervals.
One or more embodiments of the present application will be described in detail below with reference to drawings. Other features, objects and advantages of the present application will become more apparent from the description, drawings, and claims.

## BRIEF DESCRIPTION OF THE DRAWINGS

In order to describe the technical solutions of the embodiments of the present application or the related art more clearly, the accompanying drawings required for describing the embodiments or for describing the related art will be briefly introduced as follows. Apparently, the accompanying drawings, in the following description, illustrate merely some embodiments of the present application, and for a person of ordinary skill in the art, other drawings can also be obtained according to these accompanying drawings without making any creative efforts.

FIG. 1 is a flow diagram of an online full-dimension inspection method based on multi-view vision according to a preferred embodiment of the present application.
FIG. 2 is a schematic diagram showing a structure of a workpiece to be inspected according to a preferred embodiment of the present application.
FIG. 3 is a schematic diagram showing hole coordinates as captured by cameras according to a preferred embodiment of the present application.
FIG. 4 is a schematic diagram of a template image according to a preferred embodiment of the present application.
FIG. 5 is a schematic diagram of template hole center coordinates according to a preferred embodiment of the present application.
FIG. 6 is a schematic diagram of a calibration plate according to a preferred embodiment of the present application.
FIG. 7 is a schematic diagram of a calibration workpiece with the calibration plate attached according to a preferred embodiment of the present application.
FIG. 8 is a diagram showing triangulation according to a preferred embodiment of the present application.

## DETAILED DESCRIPTION OF THE EMBODIMENTS

The technical solutions of the present application will be described clearly and completely below. Apparently, the described embodiments are a part of but not all of the embodiments of the present application. Based on the embodiments in the present application, all other embodiments obtained without any creative efforts by a person of ordinary skill in the art fall within the scope of protection of the present application.

Unless otherwise defined, the technical or scientific terms used in the present application shall have the ordinary meaning as understood by a person of ordinary skill in the art to which the present application belongs. The terms "first," "second," and similar terms used in the present application do not indicate any order, quantity, or importance, but are merely used to distinguish different components. Similarly, the term like "one" or "a/an" does not indicate a quantity limit, but rather that there is at least one. The term like "connect" or "couple" is not limited to physical or mechanical connections, but can include electrical connections, whether direct or indirect. "Up," "down," "left," and "right" are only used to indicate relative positional relationships. When the absolute position of the object being described changes, the relative positional relationship also changes accordingly.

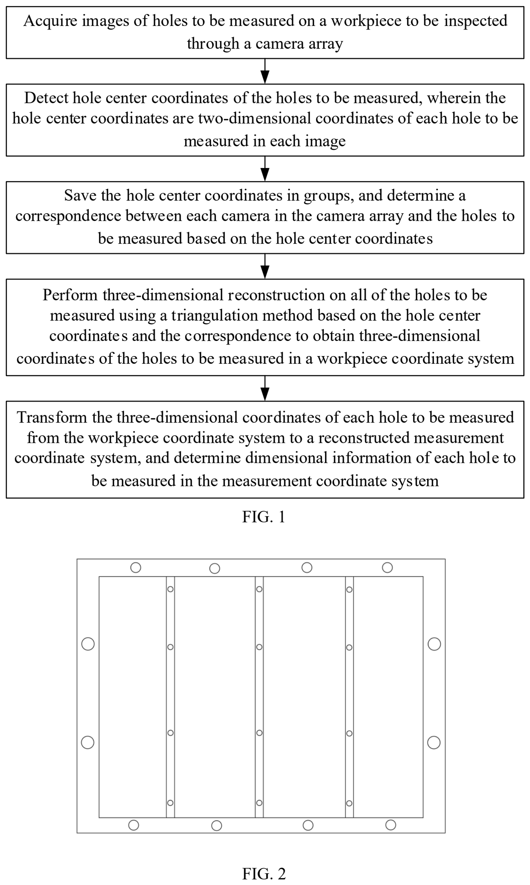

Referring to FIG. 1, the present application provides an online full-dimension inspection method based on multi-view vision, including:

S1: acquiring images of holes to be measured on a workpiece to be inspected through a camera array;
S2: detecting hole center coordinates of the holes to be measured, wherein the hole center coordinates are two-dimensional coordinates of each hole to be measured in each image;
S3: saving the hole center coordinates in groups, and determining a correspondence between each camera in the camera array and the holes to be measured based on the hole center coordinates;
S4: performing three-dimensional reconstruction on all of the holes to be measured using a triangulation method based on the hole center coordinates and the correspondence to obtain three-dimensional coordinates of the holes to be measured in a workpiece coordinate system; and
S5: transforming the three-dimensional coordinates of each hole to be measured from the workpiece coordinate system to a reconstructed measurement coordinate system, and determining dimensional information of each hole to be measured in the measurement coordinate system.

It should be understood that the above-described online full-dimension inspection method based on multi-view vision can be applied to an online full-dimension inspection system based on multi-view vision. The system includes: a darkroom, a camera array, and a master control unit. The camera array is communicatively connected to the master control unit. The camera array includes a plurality of first cameras, a plurality of second cameras, and a plurality of third cameras. The plurality of first cameras are spaced apart from each other and arranged at top of the darkroom, the plurality of second cameras are spaced apart from each other and arranged at bottom of the darkroom, and the plurality of third cameras are spaced apart from each other on side walls of the darkroom in a circumferential direction of the darkroom.

The camera array is used to acquire the images of the holes to be measured on the workpiece to be inspected. The camera array can be composed of CCD industrial cameras. The layout scheme of the cameras can be customized according to the workpiece morphology and the positions of the holes to be measured.

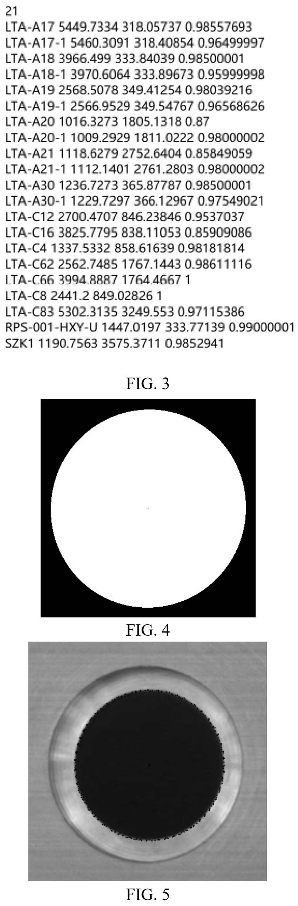

The correspondence between cameras and the holes to be measured in S3 refers to which holes can be captured by each camera and which cameras can capture each hole. For example, if camera A can capture hole 1, hole 2, and hole 3, and hole 1 can be captured by both camera A and camera B, then there exists a correspondence between camera A and holes 1, 2, and 3, and a correspondence between hole 1 and cameras A and B. In the presence of such cross-correspondences, the relationship among all cameras and holes can form a network structure. As shown in FIGS. 2 and 3, FIG. 2 is a schematic diagram showing a structure of a workpiece to be inspected, and FIG. 3 is a schematic diagram showing hole coordinates as captured by cameras.

The above-described online full-dimension inspection method based on multi-view vision determines the three-dimensional coordinates of the holes to be measured through joint calibration using the camera array, and determines the dimensional information of the holes to be measured based on the measurement coordinate system and the three-dimensional coordinates of the holes to be measured, which achieves non-contact inspection, and is suitable for high-precision dimensional inspection of online inspection requirements on an assembly line, and the method has the characteristics of high efficiency, high precision, and high stability.

Optionally, S1 includes:
controlling the camera array to acquire an image of the workpiece to be inspected in a time-division manner under set general lighting and local lighting.

In the present optional embodiment, the general lighting refers to illumination from light sources arranged on inner walls of the darkroom at intervals, while the local lighting refers to illumination generated by a light source placed at a specific location on the inner wall of the darkroom based on an actual requirement. Performing time-division imaging under both general and local lighting can ensure optimal imaging for each hole.

Furthermore, after acquiring the image of the workpiece to be inspected, a region of interest (ROI) is annotated for each hole, which facilitates narrowing the inspection scope during subsequent inspection and also serves the purpose of identifying the hole name in the current camera view.

Optionally, S2 includes:

generating, through projection, 2D template images of the holes to be measured under the camera array and template hole center coordinates corresponding to the holes to be measured based on intrinsic and extrinsic parameters of cameras in the camera array and CAD three-dimensional coordinates of the holes;
obtaining edge feature point information from the template images; and
cropping a ROI image of each hole to be measured from the image of the workpiece to be inspected, performing edge extraction on the ROI image to obtain an edge image, extracting gradient information of each pixel from the edge image, and performing sliding window search and matching between the gradient information and the edge feature point information in the template images to obtain the hole center coordinates in the ROI image.

In the present optional embodiment, a template matching method is used to detect the hole center coordinates. As an alternative implementation, other feasible methods such as circle fitting or ellipse fitting for center inspection can also be used in other embodiments. This is merely an example and not a limitation.

Specifically, the template matching process includes steps such as template generation, template training, and template matching as follows:

Template generation: Based on the intrinsic and extrinsic parameters of the cameras and the CAD 3D coordinates of the holes, 2D template images of the holes under the cameras are generated through the projection. In a feasible embodiment, the template image is an image having a black background with a white filled pattern, as shown in FIGS. 4 and 5. In addition to the template image shown in FIG. 4, each hole also has corresponding template hole center coordinates as shown in FIG. 5. In FIG. 5, the template hole center coordinates are (x: 2669.436279, y: 1018.707703). The CAD 3D coordinates of the hole can be determined based on a workpiece drawing.

Template Training: After obtaining the template image, the template training begins. The purpose of template training is to obtain the edge feature point information from the template image, which includes coordinates of the feature points on the template image, gradient direction, etc. After the template image has been trained, the feature point information is saved to a YAML file, which can reduce the time required for subsequent template matching.

In actual dimensional measurement, saved template feature point information can be read directly, and then a correlation between the template and a real hole image can be calculated.

Template Matching: The hole center coordinates are obtained through template matching. The ROI image of the hole to be measured is cropped from the acquired image of the workpiece to be inspected, and then a smoothing and contrast enhancement processing is performed on the cropped ROI image. To improve the effectiveness of feature point extraction, the edge extraction is first performed on the ROI image, and the gradient information for each pixel is extracted from the edge image. Finally, the sliding window search and matching are performed between the gradient information and the template features to obtain the hole center coordinates in the ROI image of the hole to be measured. After performing template matching for all holes to be measured, their center coordinates are obtained and stored in groups by camera number for use in the reconstruction of the 3D hole center coordinates in subsequent steps.

Optionally, S4 includes:

determining optimized camera intrinsic parameters and optimized camera extrinsic parameters; and
calculating the three-dimensional coordinates of the holes to be measured using the triangulation method based on the camera intrinsic parameters, the camera extrinsic parameters, and the correspondence. The calculation formula satisfies the following relation:

$$X = K[R|T]x,$$

where $X$ represents reconstructed hole center coordinates after triangulation, $K$ represents the camera intrinsic parameters, $[R|T]$ represents the camera extrinsic parameters, and x represents the hole center coordinates.

In the present optional embodiment, a coordinate system for the optimized camera intrinsic and extrinsic parameters is the same as that of the CAD workpiece, facilitating subsequent coordinate system establishment and measurement. The steps for optimizing the camera intrinsic and extrinsic parameters are as follows.

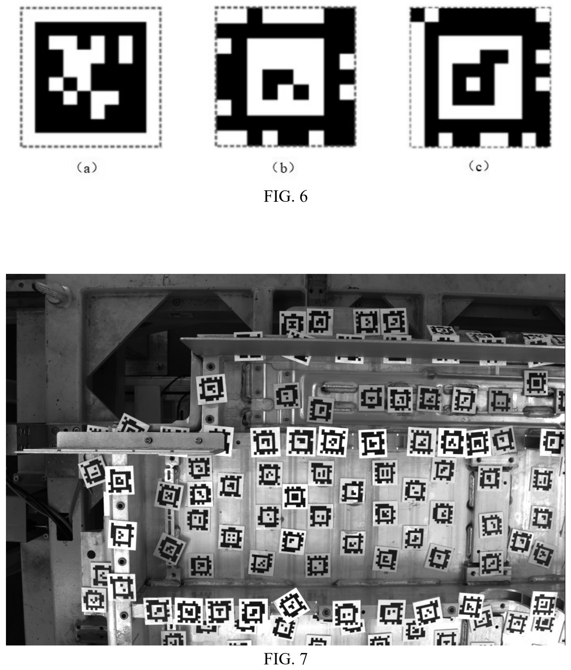

Initial Camera Calibration: In a multi-view vision system, to calibrate multiple cameras into the same coordinate system, a sufficient number of calibration plates (i.e., AprilTags) are attached to the sample of the workpiece to be inspected as a calibration workpiece. The calibration plates are shown in FIG. 6, and each calibration plate has its own ID. For example, the ID for FIG. 6(a) is "Tag36h11", the ID for FIG. 6(b) is "TagStandard41h12", and the ID for FIG. 6(c) is "TagStandard52h13", which ensures that each calibration plate detected by any camera corresponds to a unique ID. The calibration workpiece with the calibration plates attached is shown in FIG. 7. After attachment, the calibration workpiece is placed in the darkroom fixture for image acquisition. One set of images can be captured, or multiple sets can be captured after moving the workpiece. Capturing multiple sets can effectively increase the number of feature points and improve the calibration accuracy. After image acquisition, COLMAP is used for joint calibration of all cameras, which calibrates all cameras into the coordinate system of one of the cameras, thereby completing the camera calibration. After initial calibration of the cameras, camera intrinsic parameters, distortion coefficients, and camera extrinsic parameters relative to the chosen camera coordinate system are obtained.

It should be understood that COLMAP is an open-source software package for multi-view stereo reconstruction, capable of generating the geometry and texture of a 3D scene from multiple images. COLMAP can be used to perform camera pose estimation and camera parameter calibration in the multi-view vision system.

Transformation from Camera Coordinate System to Workpiece Coordinate System: Before transformation, the CAD model of the workpiece to be transformed needs to be determined. More specifically, the coordinate values of each hole in the CAD need to be determined. Ideally, these coordinate values are measured using a coordinate measuring machine (CMM) and serve as the ground truth for the present application. After obtaining initial camera parameters for each camera in the multi-view system, the 2D coordinates of each hole in each camera view are detected. The 3D coordinates of each hole in the camera coordinate system are reconstructed through triangulation. Then, a transformation relationship between the 3D coordinates in the camera coordinate system and the coordinates of the workpiece hole obtained by the CMM is calculated by a matrix operation, so as to obtain a rotation matrix (R), a translation vector (T), and a scaling factor (S) between the two coordinate systems. Finally, applying these parameters to each camera can achieve the transformation from the camera coordinate system to the workpiece coordinate system, facilitating measurement in subsequent steps.

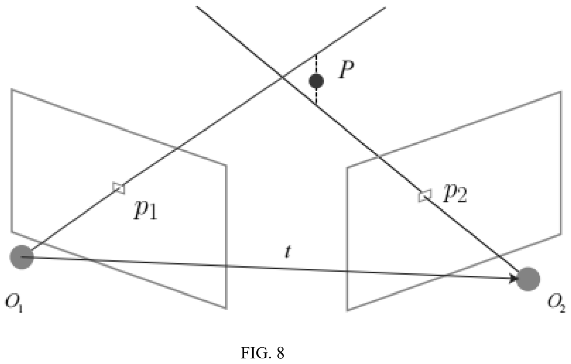

Optimizing Camera Parameters Using Holes: From the previous step, the 3D observed coordinates and the CMM measurement values for each hole are obtained. As shown in FIG. 8, by using bundle adjustment (BA), the 3D observed coordinates of each hole can be constrained using the CMM measurement values, making the observed values of each hole closer to the true values (i.e., CMM measurement values). Since this constraint effectively acts on the camera intrinsic and extrinsic parameters, more accurate camera intrinsic and extrinsic parameters can be obtained in this way, thus completing the optimization of camera parameters based on the holes.

Furthermore, the prerequisite for using the triangulation method is knowing the intrinsic and extrinsic parameters (i.e., pose) of each camera, and knowing the hole center coordinates of each hole (i.e., measurement point) in each camera view. Since both the camera intrinsic and extrinsic parameters have been obtained, and the 2D coordinates of each hole in different cameras have been acquired, 3D reconstruction for each hole can be performed based on triangulation principles to obtain the coordinate values of the hole to be measured in the workpiece coordinate system.

Specifically, assuming the reconstructed hole center coordinates after triangulation are $X$, its image coordinates in the camera image are *x,* the camera intrinsic parameters are *K ,* the rotation matrix is *R,* the translation vector is *T,* and the combination [*R|T*] of R and T represents the camera extrinsic parameters, a relationship between the hole's image coordinates and 3D coordinates can be denoted by the following formula, and the 3D coordinates of the hole can be calculated based on at least two point pairs, where at least two point pairs are the image coordinates of the same hole under two cameras.

$$X = K[R|T]x$$

This formula allows for the reconstruction of the 3D coordinates of each hole based on the hole center coordinates from a plurality of cameras, which can be used for system establishment and measurement in subsequent steps.

From the previous steps, the 3D coordinates of each hole to be measured on the workpiece can be obtained, and these coordinates are in the workpiece coordinate system. However, these coordinates are not aligned with a datum hole according to a measurement requirement. Therefore, it is necessary to establish a coordinate system for the reconstructed coordinates according to a drawing requirement of an actual workpiece to be inspected. Furthermore, in actual workpieces, different parts of the same workpiece may need to be measured against different datums depending on assembly relationships. The re-establishment of the coordinate system can accommodate measurements against multiple datums.

Optionally, before S5, the method further includes:

determining one datum plane and two datum holes of the workpiece to be inspected, and aligning the one datum plane and the two datum holes with theoretical coordinates according to a drawing requirement of the actual workpiece to be inspected to perform coordinate system establishment and obtain the measurement coordinate system.

In the present optional embodiment, the steps for establishing the coordinate system are as follows.

Since the camera parameters are defined in the workpiece coordinate system, establishing a coordinate system for the reconstructed 3D coordinates is a rigid body transformation process. The scaling factor (S), rotation matrix (R), and translation vector (T) required for this rigid body transformation are obtained during the alignment of the reconstructed coordinates with the theoretical coordinates.

One datum plane and two datum holes of the workpiece to be inspected are determined. During coordinate system establishment, the reconstructed datum coordinates must be strictly aligned with the CAD nominal datum coordinates. Assuming there are a datum plane A, a first datum hole B, and a second datum hole C, after alignment, the normal of the datum plane for the reconstructed coordinates, the (x, y) coordinates of the first datum hole B, and the x coordinate (or y coordinate, depending on the workpiece) of the second datum hole C are all be consistent with the nominal values. The x and y coordinates refer to the theoretical coordinates.

By establishing the coordinate system according to the drawing requirement of the actual workpiece to be inspected, the reconstructed three-dimensional coordinates of the hole to be measured can be transformed into different datum coordinate systems to meet various datum measurement needs in actual inspection requirements. By obtaining the dimensional information for all holes under multiple datums, the measurement result can better match the actual measurement requirement, thus improving the measurement accuracy.

Optionally, S5 includes:

determining a position tolerance of each hole to be measured, wherein the position tolerance satisfies the following relation:

$$position = 2 * sqrt((x1 - x0)^2 + (y1 - y0)^2 + (z1 - z0)^2),$$

where *position* represents the position tolerance, reconstructed measurement coordinates are (x1, y1, z1), the theoretical coordinates are (x0, y0, z0), and *sqrt* represents the square root expression; and
determining the dimensional information of each hole to be measured based on the three-dimensional coordinates of each hole to be measured in the workpiece coordinate system and the position tolerance.

As an alternative embodiment, in other feasible implementations, the above-described method can also be used to measure flatness, profile tolerance, linear distance, and the like.

The method for determining the flatness is as follows.

Assuming the planar feature points are *a*1, *a*2, ..., *an,* the plane fitted by the feature points is *Ax + By + Cz + D* = 0, and the distances from the feature points to the plane are *d*1, *d*2, ... , *dn,* then the flatness can be denoted by the following formula:

$$flatness = max(d1, d2, \ldots, dn) - min(d1, d2, \ldots, dn),$$

where *max* and *min* represent the maximum and minimum distances from the feature point to the plane, respectively. *A, B, C* represent the components of the plane's normal vector on the X, Y, Z axes, respectively, and D is a constant term representing the distance from the plane to the origin.

The method for determining the profile tolerance is as follows:

It is assumed that the planar feature points are *a1, a2, ..., an,* the theoretical coordinates of the plane are *X,* the theoretical normal vector is (1, 0, 0), and the plane fitted by the feature points is *Ax + By + Cz + D* = 0. Since the theoretical plane normal vector is (1, 0, 0), the profile tolerance for the plane only needs to calculate the deviation in the X direction. Assuming:

$$d1x = a1_x - X_x, d2x = a2_x - X_x, \ldots, dnx = an_x - X_x,$$

where *d1x, d2x, and dnx* represent the deviations of each planar feature point from the theoretical feature point in the X direction, then the profile tolerance can be denoted as:

$$profile = 2 * max(d1x, d2x, \ldots, dnx),$$

The method for determining the linear distance is as follows:

Assuming the coordinates of two holes are (*x1, y1, z1*) and (*x2, y2, z2*), the linear distance can be calculated using the Euclidean distance between the two points.

$$distance = sqrt((x2 - x1)^2 + (y2 - y1)^2 + (z2 - z1)^2).$$

In this embodiment, the linear distance refers to a distance between the two holes.

In an example, using the above-described online full-dimension inspection method based on multi-view vision, the inspection of 1000 or more measurement points can be achieved within 150 seconds, with all inspection accuracies reaching advanced levels. For instance, a position tolerance of 0.3 can achieve a correlation performance of over 98%, a flatness of 0.15 can achieve over 98%, and a profile tolerance of 0.3 can achieve over 95%.

The present application further provides an online full-dimension inspection system based on multi-view vision, including: a darkroom, a camera array, and a master control unit. The camera array is communicatively connected to the master control unit. The camera array includes a plurality of first cameras, a plurality of second cameras, and a plurality of third cameras. The plurality of first cameras are spaced apart from each other and arranged at top of the darkroom, the plurality of second cameras are spaced apart from each other and arranged at bottom of the darkroom, and the plurality of third cameras are spaced apart from each other on side walls of the darkroom in a circumferential direction of the darkroom.

The camera array is configured to acquire images of holes to be measured on a workpiece to be inspected.

The master control unit is configured to: detect hole center coordinates of the holes to be measured, wherein the hole center coordinates are hole center coordinates of the holes to be measured under the cameras;

save the hole center coordinates in groups, and determine a correspondence between each camera in the camera array and the holes to be measured based on the hole center coordinates;

perform three-dimensional reconstruction on all of the holes to be measured based on the correspondence and a triangulation method, and determine three-dimensional coordinates of all holes to be measured in a workpiece coordinate system based on a three-dimensional reconstruction result and the hole center coordinates; and

transform the three-dimensional coordinates of the holes to be measured in the workpiece coordinate system into dimensional information in a measurement coordinate system.

Optionally, the system further includes a plurality of light sources arranged on inner walls of the darkroom at intervals.

In the present optional embodiment, specifically, the plurality of light sources may include a plurality of first light sources and a plurality of second light sources. The plurality of first light sources are located in the upper part of the darkroom and oriented towards the top wall of the darkroom, and are spaced apart from each other in a circumferential direction of the darkroom. The plurality of second light sources are located in the lower part of the darkroom and oriented towards the bottom wall of the darkroom, and are spaced apart from each other in a circumferential direction of the darkroom.

Specifically, the master control unit can be used to control different light sources to illuminate at different times, thereby achieving different lighting and imaging for each hole to ensure optimal imaging for each hole.

The above-described online full-dimension inspection system based on multi-view vision can implement various embodiments of the above-described online full-dimension inspection method based on multi-view vision and achieve the same beneficial effects, which will not be described repeatedly here.

The preferred embodiments of the present application have been described in detail above. It should be understood that a person skilled in the art can make numerous modifications and variations based on the concept of the present application without creative effort. Therefore, any technical solution that can be obtained by a person skilled in the art based on the concept of the present application and on the basis of the related art through logical analysis, reasoning or limited experimentation should be within the scope of protection defined by the claims.

**Claims**

1. An online full-dimension inspection method based on multi-view vision, **characterized by** comprising:

   S1: acquiring images of holes to be measured on a workpiece to be inspected through a camera array;
   S2: detecting hole center coordinates of the holes to be measured, wherein the hole center coordinates are two-dimensional coordinates of each hole to be measured in each image;
   S3: saving the hole center coordinates in groups, and determining a correspondence between each camera in the camera array and the holes to be measured based on the hole center coordinates;
   S4: performing three-dimensional reconstruction on all of the holes to be measured using a triangulation method based on the hole center coordinates and the correspondence to obtain three-dimensional coordinates of the holes to be measured in a workpiece coordinate system; and
   S5: transforming the three-dimensional coordinates of each hole to be measured from the workpiece coordinate system to a reconstructed measurement coordinate system, and determining dimensional information of each hole to be measured in the measurement coordinate system.

2. The online full-dimension inspection method based on multi-view vision according to claim 1, **characterized in that** the S1 comprises:
   controlling the camera array to acquire an image of the workpiece to be inspected in a time-division manner under set general lighting and local lighting.

3. The online full-dimension inspection method based on multi-view vision according to claim 2, **characterized in that** the S2 comprises:

   generating, through projection, 2D template images of the holes to be measured under the camera array and template hole center coordinates corresponding to the holes to be measured based on intrinsic and extrinsic parameters of cameras in the camera array and CAD three-dimensional coordinates of the holes;
   obtaining edge feature point information from the template images; and
   cropping a region of interest, ROI image of each hole to be measured from the image of the workpiece to be inspected, performing edge extraction on the ROI image to obtain an edge image, extracting gradient information of each pixel from the edge image, and performing sliding window search and matching between the gradient information and the edge feature point information in the template images to obtain the hole center coordinates in the ROI image.

4. The online full-dimension inspection method based on multi-view vision according to claim 1, **characterized in that** the correspondence between each camera and the holes to be measured in the S3 refers to which holes can be captured by each camera and which cameras can capture each hole.

5. The online full-dimension inspection method based on multi-view vision according to claim 1, **characterized in that** the S4 comprises:

   determining optimized camera intrinsic parameters and optimized camera extrinsic parameters; and
   calculating the three-dimensional coordinates of the holes to be measured using the triangulation method based on the camera intrinsic parameters, the camera extrinsic parameters, and the correspondence, wherein the calculation formula satisfies the following relation:

$$X = K[R|T]x,$$

where $X$ represents reconstructed hole center coordinates after triangulation, $K$ represents the camera intrinsic parameters, $[R|T]$ represents the camera extrinsic parameters, and x represents the hole center coordinates.

6. The online full-dimension inspection method based on multi-view vision according to claim 1, **characterized in that** before the S5, the method further comprises:
determining one datum plane and two datum holes of the workpiece to be inspected, and aligning the one datum plane and the two datum holes with theoretical coordinates according to a drawing requirement of an actual workpiece to be inspected to perform coordinate system establishment and obtain the measurement coordinate system.

7. The online full-dimension inspection method based on multi-view vision according to claim 6, **characterized in that** the S5 comprises:

determining a position tolerance of each hole to be measured, wherein the position tolerance satisfies the following relation:

$$position = 2 * sqrt((x1 - x0)^2 + (y1 - y0)^2 + (z1 - z0)^2),$$

where *position* represents the position tolerance, reconstructed measurement coordinates are (x1, y1, z1), the theoretical coordinates are (x0, y0, z0), and *sqrt* represents the square root expression; and
determining the dimensional information of each hole to be measured based on the three-dimensional coordinates of each hole to be measured in the workpiece coordinate system and the position tolerance.

8. An online full-dimension inspection system based on multi-view vision, **characterized by** comprising: a darkroom, a camera array, and a master control unit, wherein the camera array is communicatively connected to the master control unit, the camera array comprises a plurality of first cameras, a plurality of second cameras, and a plurality of third cameras, the plurality of first cameras are spaced apart from each other and arranged at top of the darkroom, the plurality of second cameras are spaced apart from each other and arranged at bottom of the darkroom, and the plurality of third cameras are spaced apart from each other on side walls of the darkroom in a circumferential direction of the darkroom;

the camera array is configured to acquire images of holes to be measured on a workpiece to be inspected; and
the master control unit is configured to:

detect hole center coordinates of the holes to be measured, wherein the hole center coordinates are hole center coordinates of the holes to be measured under the cameras;
save the hole center coordinates in groups, and determine a correspondence between each camera in the camera array and the holes to be measured based on the hole center coordinates;
perform three-dimensional reconstruction on all of the holes to be measured based on the correspondence and a triangulation method, and determine three-dimensional coordinates of all holes to be measured in a workpiece coordinate system based on a three-dimensional reconstruction result and the hole center coordinates; and
transform the three-dimensional coordinates of the holes to be measured in the workpiece coordinate system into dimensional information in a reconstructed measurement coordinate system.

9. The online full-dimension inspection system based on multi-view vision according to claim 8, **characterized by** further comprising a plurality of light sources arranged on inner walls of the darkroom at intervals.

Acquire images of holes to be measured on a workpiece to be inspected through a camera array

Detect hole center coordinates of the holes to be measured, wherein the hole center coordinates are two-dimensional coordinates of each hole to be measured in each image

Save the hole center coordinates in groups, and determine a correspondence between each camera in the camera array and the holes to be measured based on the hole center coordinates

Perform three-dimensional reconstruction on all of the holes to be measured using a triangulation method based on the hole center coordinates and the correspondence to obtain three-dimensional coordinates of the holes to be measured in a workpiece coordinate system

Transform the three-dimensional coordinates of each hole to be measured from the workpiece coordinate system to a reconstructed measurement coordinate system, and determine dimensional information of each hole to be measured in the measurement coordinate system

FIG. 1

FIG. 2

```
21
LTA-A17 5449.7334 318.05737 0.98557693
LTA-A17-1 5460.3091 318.40854 0.96499997
LTA-A18 3966.499 333.84039 0.98500001
LTA-A18-1 3970.6064 333.89673 0.95999998
LTA-A19 2568.5078 349.41254 0.98039216
LTA-A19-1 2566.9529 349.54767 0.96568626
LTA-A20 1016.3273 1805.1318 0.87
LTA-A20-1 1009.2929 1811.0222 0.98000002
LTA-A21 1118.6279 2752.6404 0.85849059
LTA-A21-1 1112.1401 2761.2803 0.98000002
LTA-A30 1236.7273 365.87787 0.98500001
LTA-A30-1 1229.7297 366.12967 0.97549021
LTA-C12 2700.4707 846.23846 0.9537037
LTA-C16 3825.7795 838.11053 0.85909086
LTA-C4 1337.5332 858.61639 0.98181814
LTA-C62 2562.7485 1767.1443 0.98611116
LTA-C66 3994.8887 1764.4667 1
LTA-C8 2441.2 849.02826 1
LTA-C83 5302.3135 3249.553 0.97115386
RPS-001-HXY-U 1447.0197 333.77139 0.99000001
SZK1 1190.7563 3575.3711 0.9852941
```

FIG. 3

FIG. 4

FIG. 5

（a） （b） （c）

FIG. 6

FIG. 7

FIG. 8

## INTERNATIONAL SEARCH REPORT

| International application No. |
|---|
| **PCT/CN2023/116674** |

### A. CLASSIFICATION OF SUBJECT MATTER

G01B 11/00(2006.01)i; G01B 11/08(2006.01)i; G01B 11/14(2006.01)i; G01B 11/24(2006.01)i; G01B 11/30(2006.01)i

According to International Patent Classification (IPC) or to both national classification and IPC

### B. FIELDS SEARCHED

Minimum documentation searched (classification system followed by classification symbols)

IPC:G01B

Documentation searched other than minimum documentation to the extent that such documents are included in the fields searched

Electronic data base consulted during the international search (name of data base and, where practicable, search terms used)

CNABS, CNKI, VEN, CNTXT, ENTXTC, Elsevier Science, ISI_Web of Science: 孔, 图像, 视觉, 相机, 照相, 像机, CCD, 摄像, 图片, 心, 三角化, 坐标系, 工件坐标系, 测量坐标系, 尺寸, 模板, 边缘, 梯度, 像素, 搜索, 匹配, hole, image, vision, camera, photograph+, CCD, picture, heart, center, triangular+, coordinate system, template, edge, gradient, pixel, search+, match+

### C. DOCUMENTS CONSIDERED TO BE RELEVANT

| Category* | Citation of document, with indication, where appropriate, of the relevant passages | Relevant to claim No. |
|---|---|---|
| Y | CN 103615980 A (BEIJING INSTITUTE OF TECHNOLOGY) 05 March 2014 (2014-03-05) description, paragraphs 12-115, and figures 1-9 | 1-9 |
| Y | CN 114001651 A (BEIHANG UNIVERSITY) 01 February 2022 (2022-02-01) description, paragraphs 13-102, and figures 1-7 | 1-9 |
| A | CN 109974608 A (JILIN UNIVERSITY) 05 July 2019 (2019-07-05) entire document | 1-9 |
| A | CN 111047702 A (CHENGDU AIRCRAFT INDUSTRIAL (GROUP) CO., LTD.) 21 April 2020 (2020-04-21) entire document | 1-9 |
| A | CN 111121655 A (ZHEJIANG UNIVERSITY) 08 May 2020 (2020-05-08) entire document | 1-9 |
| A | CN 112729112 A (YANGZHOU UNIVERSITY) 30 April 2021 (2021-04-30) entire document | 1-9 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 April 2024** | **26 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 737 846 A1**

## INTERNATIONAL SEARCH REPORT

International application No.

**PCT/CN2023/116674**

### C. DOCUMENTS CONSIDERED TO BE RELEVANT

| Category* | Citation of document, with indication, where appropriate, of the relevant passages | Relevant to claim No. |
|---|---|---|
| A | CN 115289974 A (SIKAN TECHNOLOGY (HANGZHOU) CO., LTD. et al.) 04 November 2022 (2022-11-04) <br> entire document | 1-9 |
| A | CN 115900537 A (ZHONGSHAN AISCENT TECHNOLOGIES, INC.) 04 April 2023 (2023-04-04) <br> entire document | 1-9 |
| A | CN 116402792 A (NORTH CHINA INSTITUTE OF AEROSPACE ENGINEERING) 07 July 2023 (2023-07-07) <br> entire document | 1-9 |
| A | JP 2010286355 A (SUZUKI MOTOR CORP.) 24 December 2010 (2010-12-24) <br> entire document | 1-9 |
| A | WO 2023046211 A1 (TIANYUAN 3D (TIANJIN) TECHNOLOGY CO., LTD.) 30 March 2023 (2023-03-30) <br> entire document | 1-9 |

Form PCT/ISA/210 (second sheet) (July 2022)

**INTERNATIONAL SEARCH REPORT**
Information on patent family members

International application No.

**PCT/CN2023/116674**

| Patent document cited in search report | | | Publication date (day/month/year) | Patent family member(s) | | | Publication date (day/month/year) |
|---|---|---|---|---|---|---|---|
| CN | 103615980 | A | 05 March 2014 | None | | | |
| CN | 114001651 | A | 01 February 2022 | None | | | |
| CN | 109974608 | A | 05 July 2019 | None | | | |
| CN | 111047702 | A | 21 April 2020 | None | | | |
| CN | 111121655 | A | 08 May 2020 | None | | | |
| CN | 112729112 | A | 30 April 2021 | None | | | |
| CN | 115289974 | A | 04 November 2022 | None | | | |
| CN | 115900537 | A | 04 April 2023 | None | | | |
| CN | 116402792 | A | 07 July 2023 | None | | | |
| JP | 2010286355 | A | 24 December 2010 | None | | | |
| WO | 2023046211 | A1 | 30 March 2023 | CA | 3233222 | A1 | 30 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310958248